# NEUE EUROPÄISCHE PATENTSCHRIFT

(11) **EP 2 095 978 B2**
(45) Veröffentlichungstag und Bekanntmachung des Hinweises auf die Entscheidung über den Einspruch: **07.06.2017**
(45) Hinweis auf die Patenterteilung: 06.07.2011
(21) Anmeldenummer: 08173077.2
(22) Anmeldetag: 30.12.2008
(51) Int. Cl.: B60D 1/14

(54) **Anhängekupplung**
Tow bar
Attelage

(30) Priorität: 28.02.2008 DE 102008012622
(43) Veröffentlichungstag der Anmeldung: 02.09.2009
(73) Patentinhaber: Scambia Holdings Cyprus Limited, 3106 Limassol (CY)
(72) Erfinder: Haustein, Hartmut, 75446, Wiernsheim (DE); Rimmelspacher, Bernhard, 76287, Rheinstetten (DE); Wegner, Bert, 73333, Gingen (DE); Riehle, Jörg, 71679, Asperg (DE)
(74) Vertreter: Hoeger, Stellrecht & Partner Patentanwälte mbB

(56) Entgegenhaltungen:
- EP-A1- 0 430 665
- EP-A2- 1 840 007
- WO-A-2006/065117
- DE-A1-102005 038 150
- DE-C2- 19 849 358
- DE-T2- 60 129 115
- DE-U1- 29 616 145
- DE-U1-202004 012 190
- NL-C1- 1 029 987
- US-A- 5 489 111
- US-B1- 7 108 272
- Montage-und Betriebsanleitung Lexus RX300

## Beschreibung

Die Erfindung betrifft eine Anhängekupplung umfassend einen quer zu einer Fahrtrichtung eines Kraftfahrzeugs und insbesondere durch eine hintere Stoßfängereinheit verdeckten Querträger, sich ausgehend von dem Querträger in der Fahrtrichtung erstreckende Seitenträger zur Verbindung des Querträgers miteiner Fahrzeugkarosserie und eine an dem Querträger angeordnete Trägerbasis, an welcher ein eine Kupplungskugel tragender Kugelhals gehalten ist

Aus der WO 2006/065117 A1 ist eine Anhängekupplung bekannt, die einen quer zu einer Fahrtrichtung eines Kraftfahrzeugs und durch eine hintere Stoßfängereinheit verdeckten "crash beam" und sich ausgehend von dem "crash beam" in der Fahrtrichtung erstreckende Seitenträger zur Verbindung des "crash beam" mit einer Fahrzeugkarosserie und eine an dem "crash beam" angeordnete Montagebasis aufweist, an welcher ein eine Kupplungskugel tragender Kugelhals gehalten ist, wobei der "crash beam" mindestens ein Oberteil und ein Unterteil sowie ein das Oberteil und das Unterteil verbindendes Verbindungselement aufweist.

Die eingangs genannten Anhängekupplungen haben den Nachteil, dass die Einheit aus Querträgern, Seltenträgern und derTrägerbasis als Schweißkonstruktionen aus Stahl hergestellt sind und damit die einzelnen Teile eine hohe Masse aufweisen, da ein für Schweißkonstruktionen geeigneter Stahl nur dann insbesondere im Bereich der Schweißnähte eine ausreichende Stabilität gewährleistet, wenn dies eine entsprechend große Materialdicke aufweist.

Damit haben bei den bekannten Anhängekupplungen die Einheiten aus den Querträgern, den Seitenträgern und der Trägerbasis ein großes Gewicht.

Aus der DE 10 2005 038 150 A ist ein Schlussquerträger für einen zwei Längsträger aufweisenden Fahrzeugrahmen eines Nutzfahrzeugs bekannt, welcher als im Wesentlichen U-förmiges Profilteil ausgeführt ist.

Der Erfindung liegt die Aufgabe zugrunde, derartige eingangs beschriebene Anhängekupplungen mit geringerem Gewicht herzustellen.

Diese Aufgabe wird erfindungsgemäß durch die Merkmale des Anspruch 1 gelöst.

Der Vorteil der erfindungsgemäßen Lösung ist darin zu sehen, dass die Verbindung zwischen dem Querträger und dem Seitenträger in einem parallel zur Längsrichtung des Querträgers verlaufenden Überlappungsbereich gelegt wird, in welchem in einfacher Weise eine stabile Verbindung zwischen dem jeweiligen Flanschteil des Seitenträgers und dem Querträger herstellbar ist, ohne dass die Verbindung bruchanfällig ist.

Prinzipiell könnte der Querträger nach wie vor als zusammengesetztes Teil ausgebildet sein. Aus Gründen einer kostengünstigen Herstellung bei hoher Stabilität ist es jedoch vorteilhaft, wenn der Querträger als einstückiges Profil ausgebildet ist, dessen Profilelemente das Oberteil und das Unterteil bilden. Dabei könnte prinzipiell das Profil als Doppel-T-Profil oder als U-förmiges Profil ausgebildet sein.

Eine besonders günstige Lösung sieht vor, dass der Querträger als Rohr hergestellt ist, welches das Oberteil und das Unterteil bildende Wandbereiche aufweist.

Um in einfacher Weise eine Verbindung mit den Flanschteilen der Seitenteile herzustellen, ist es besonders vorteilhaft, wenn das Oberteil und das Unterteil als Flachteile ausgebildet sind.

Eine besonders bevorzugte Ausführungsform der erfindungsgemäßen Anhängekupplung sieht vor, dass der Querträger aus hochfestem Stahl hergestellt ist.

Insbesondere ist dabei vorgesehen, dass der hochfeste Stahl eine Zugfestigkeit von mindestens 600 Newton/mm² aufweist.

Damit besteht die Möglichkeit, für den Querträger ein Material einzusetzen, welches bei geringem Gewicht eine hohe Stabilität aufweist.

Um insbesondere die Kraftübertragung zwischen dem Querträger und den Seitenträgern in Bereiche zu legen, in denen mit einfachen Mitteln eine stabile und im Wesentlichen belastungsbruchfreie Verbindung möglich ist, ist vorzugsweise vorgesehen, dass die Seitenträger stirnseitig des Querträgers verbindungsfrei an diesem gehalten sind, das heißt, dass mit einer Stirnseite des Querträgers und den Seitenträgern - entgegen den bislang üblichen Schweißkonstruktionen - keine Verbindung besteht

Hinsichtlich der Ausführung der Anhängekupplung im Einzelnen sieht eine vorteilhafte Lösung vor, dass die Seitenträger jeweils ein mit dem Oberteil verbundenes Flanschteil aus Flachmaterial aufweisen.

Ferner ist vorzugsweise vorgesehen, dass die Seitenträger jeweils ein mit dem Unterteil verbundenes Flanschteil aus Flachmaterial aufweisen.

Um auch die Seitenträger in einfacher Art und Weise herstellen zu können, ist vorzugsweise vorgesehen, dass ein oberes Flanschteil und ein unteres Flanschteil durch ein Querflanschteil aus Flachmaterial miteinander verbunden sind.

Insbesondere besteht dabei die Möglichkeit, die Seitenträger als Biegeteile aus Flachmaterial herzustellen und dabei die Flanschteile als Schenkel eines U zu biegen, die durch das Querflanschteil miteinander verbunden sind.

Hinsichtlich der Verbindung zwischen dem Flanschteil und dem Überlappungsbereich des Querträgers wurden bislang keine näheren Angaben gemacht. Die erfindungsgemäße Lösung sieht vor, dass mindestens ein Flanschteil der Seitenträger mit dem Oberteil und/oder dem Unterteil des Querträgers durch mindestens eine Lochschweißverbindung verbunden ist. Eine derartige Lochschweißverbindung ist eine andere Möglichkeit, den Querträger mit den Flanschteilen so zu verbinden, dass die Stabilität des Materials des Querträgers nicht negativ beeinflusst ist, insbesondere nicht thermisch derart beeinflusst ist, dass sich in dem Material des Querträgers Gefügeveränderungen einstellen. Eine derartige Lochschweißverbindung ist vorzugsweise als Laserschweißverbindung ausgeführt, die aufgrund der Tatsache, dass nur eine geringe Menge von angrenzendem Material erschmolzen wird, sich für die Herstellung einer Verbindung mit hochfesten Materialien eignet.

So sieht eine vorteilhafte Ausführungsform vor, dass das mindestens eine Flanschteil jedes der Seitenträger mit dem Oberteil und/oder mit dem Unterteil des Querträgers zusätzlich durch eine flächige stoffschlüssige Verbindung verbunden ist.

Für eine derartige flächige stoffschlüssige Verbindung besteht in einfacher Art und Weise die Möglichkeit, eine stabile Verbindung zwischen dem Querträger und den Seitenträgern herzustellen, die insbesondere eine geringe Tendenz hat, Belastungsbrüche auszubilden.

Eine derartige stoffschlüssige Verbindung kann in unterschiedlichster Art und Weise ausgebildet sein.

Eine vorteilhafte Lösung sieht vor, dass die stoffschlüssige Verbindung eine für das Material des Querträgergefüges inert herstellbare Verbindung ist, das heißt eine stoffschlüssige Verbindung, bei deren Herstellung das Gefüge des Materials des Querträgers nicht verändert wird, so dass die Möglichkeit besteht, den Querträgeraus einem Material, insbesondere Stahl, mit einem hochfesten Gefüge herzustellen und dabei in einfacher Art und Weise mit den Flanschteilen der Seitenträger zu verbinden, ohne dass die Gefügeeigenschaften beeinträchtigt werden.

Eine vorteilhafte Ausführung der Verbindungsschicht sieht vor, dass die stoffschlüssige Verbindungsschicht eine Klebeverbindung bildet. Eine derartige Verbindung lässt sich besonders einfach herstellen und realisieren, insbesondere als flächige stoffschlüssige Klebeverbindung, da sich eine derartige Verbindungsschicht auch an Oberflächentoleranzen zwischen den Flanschteilen und dem Oberteil bzw. dem Unterteil anpasst.

Eine andere vorteilhafte Lösung sieht vor, dass die stoffschlüssige Verbindungsschicht eine Hartlötverbindung darstellt. Auch das Aufbringen eines Hartlots hat den Vorteil, dass dieses sich an Oberflächentoleranzen anpasst und somit eine feste und dauerhafte Verbindung zwischen den Flanschteilen und dem Oberteil bzw. dem Unterteil bildet.

Für das Herstellen einer derartigen Verbindungsschicht ist es vorteilhaft, wenn das die flächige stoffschlüssige Verbindungsschicht bildende Material in Form einer Folie aufgetragen ist, wobei sich die Folie in einfacher Weise flächenhaft auflegen lässt und dann einfach durch Erhitzen der Einheit aus Flanschteil und Querträger im Überlappungsbereich in einen die stoffschlüssige Verbindung ausbildenden Zustand überführen lässt.

Eine besonders günstige Lösung sieht vor, dass die lokale Verbindung zusätzlich zur flächenhaften stoffschlüssigen Verbindung vorgesehen ist, um insbesondere bei Herstellung der Verbindung zwischen den Seitenträgern und dem Querträger sehr rasch eine Fixierung zwischen den Seitenträgern und dem Querträger zu erhalten, die unabhängig ist von der nachfolgenden Ausbildung der flächigen formschlüssigen Verbindung entweder durch Härten eines Klebers oder durch Erhitzen eines Lotmaterials.

Im Zusammenhang mit der bisherigen Erläuterung der einzelnen Ausführungsbeispiele wurden keine näheren Angaben über die Anordnung des Kugelhalses an dem Querträger gemacht.

So sieht eine vorteilhafte Ausführungsform vor, dass an dem Querträger eine Montagebasis vorgesehen ist, an welcher der Kugelhals entweder schwenkbar oder abnehmbar angeordnet ist, so dass der Kugelhals von einer sich parallel zu einer Fahrzeuglängsmittelebene erstreckenden Arbeitsstellung in eine sich zumindest in Teilbereichen längs des Querträgers erstreckende Ruhestellung bringbar ist.

Die Montagebasis kann dabei in unterschiedlichster Art und Weise mit dem Querträger verbunden sein. Beispielsweise wäre eine Schweißverbindung denkbar, die jedoch aufgrund der damit verbundenen Gefügeveränderungen im Material des Querträgers ungünstig ist.

Eine andere Möglichkeit wäre eine Schraubverbindung zwischen der Montagebasis und dem Querträger.

Eine andere vorteilhafte Lösung zur Fixierung der Montagebasis am Querträger sieht vor, dass an dem Querträger ein Halteelement für die Montagebasis angeordnet ist.

In diesem Fall stellt somit das Halteelement die Verbindung zwischen der Montagebasis und dem Querträger her und lässt sich in einfacher Weise sowohl am Querträger als auch an der Montagebasis fixieren.

Eine vorteilhafte Lösung sieht vor, dass das Halteelement mit einem Flansch durch eine flächige stoffschlüssige Verbindung mit mindestens einem von Oberteil und Unterteil des Querträgers verbunden ist.

Noch vorteilhafter ist es, wenn die Montagebasis durch mehrere Halteelemente an dem Querträgergehalten ist.

Eine weitere vorteilhafte Lösung sieht vor, dass das Halteelement einen mit dem Verstrebungselement des Querträgers verbindbaren Flansch aufweist, der durch eine flächige stoffschlüssige Verbindung mit dem Verstrebungselement verbunden ist.

In der Zeichnung zeigen:
- Fig. 1: eine erste perspektivische Ansicht einer Anhängekupplung von oben;
- Fig. 2: eine zweite perspektivische Ansicht einer Anhängekupplung von unten;
- Fig. 3: eine dritte perspektivische Ansicht einer Anhängekupplung von vorne rechts unten;
- Fig. 4: eine vierte perspektivische Ansicht einer Anhängekupplung von hinten rechts unten;

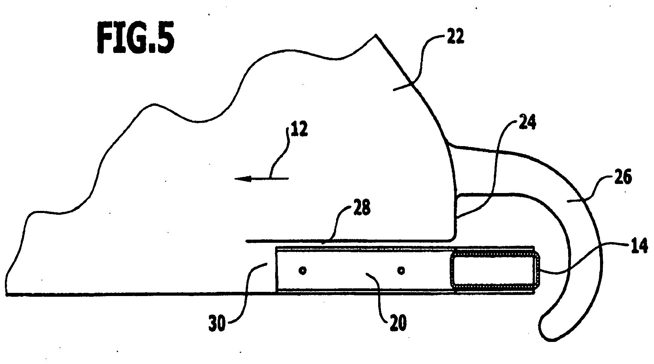

- Fig. 5: eine Ansicht längs Linie 5-5 des an einer Fahrzeugkarosserie montierten ersten Ausführungsbeispiels der Anhängekupplung;
- Fig. 6: einen Schnitt längs Linie 6-6 in Fig. 1;
- Fig. 7: einen Schnitt längs Linie 7-7 in Fig. 1;
- Fig. 8: eine perspektivische Ansicht ähnlich Fig. 1 durch ein zweites Ausführungsbeispiel einer Anhängekupplung;
- Fig. 9: eine perspektivische Ansicht ähnlich Fig. 2 des zweiten Ausführungsbeispiels der Anhängekupplung;
- Fig. 10: einen Schnitt ähnlich Fig. 7 durch das zweite Ausführungsbeispiel der Anhängekupplung;
- Fig. 11: eine perspektivische Ansicht ähnlich Fig. 1 eines dritten Ausführungsbeispiels einer Anhängekupplung;
- Fig. 12: einen Schnitt ähnlich Fig. 7 durch das dritte Ausführungsbeispiel der Anhängekupplung;
- Fig. 13: eine perspektivische Ansicht ähnlich Fig. 1 des Ausführungsbeispiels einer erfindungsgemäßen Anhängekupplung;
- Fig. 14: eine perspektivische Ansicht ähnlich Fig. 2 des Ausführungsbeispiels der erfindungsgemäßen Anhängekupplung und
- Fig. 15: einen Schnitt ähnlich Fig. 7 durch das Ausführungsbeispiel der erfindungsgemäßen Anhängekupplung.

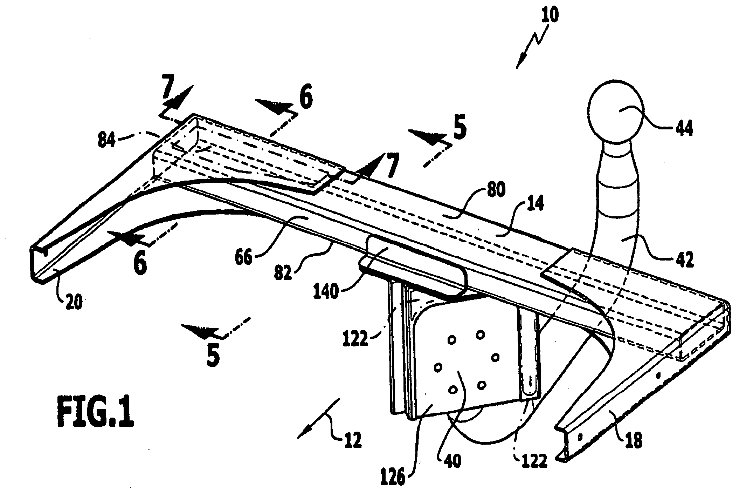

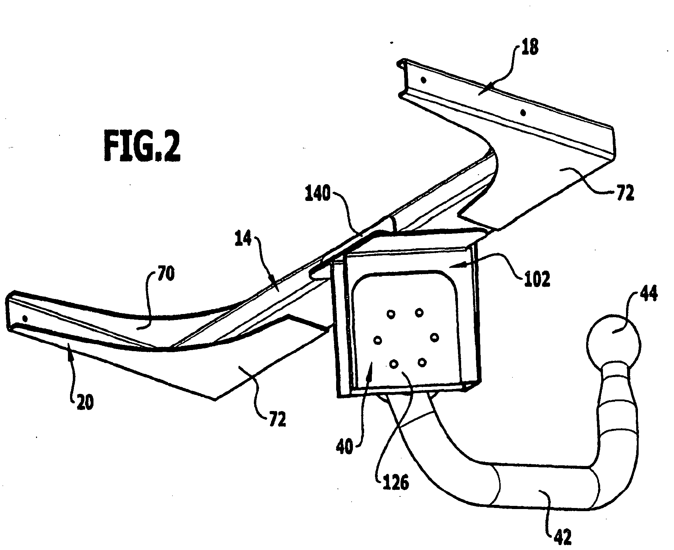

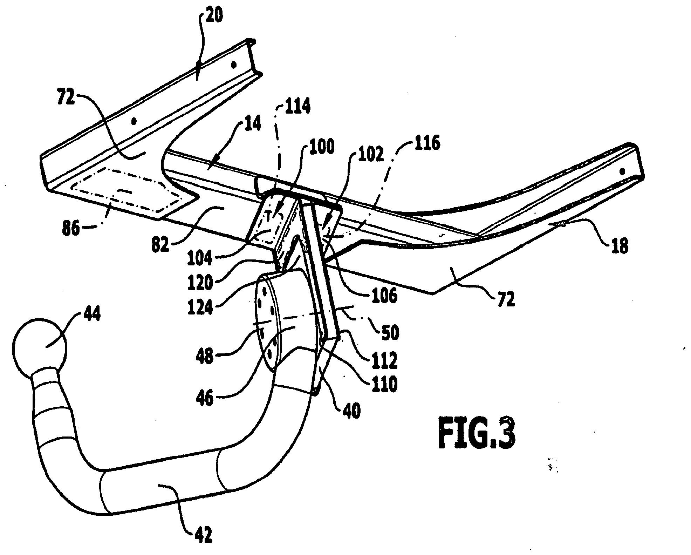

Ein Ausführungsbeispiel einer Anhängekupplung 10, dargestellt in den Fig. 1 bis 4, umfasst einen quer zu einer Fahrtrichtung 12 verlaufenden Querträger 14, welcher mittels Seitenträgern 18 und 20, die sich zumindest teilweise in der Fahrtrichtung 12 erstrecken, an einer Fahrzeugkarosserie 22 so montierbar ist, dass der Querträger 14 hinter einer Heckschürze 24 der Fahrzeugkarosserie 22 liegt und durch eine als Ganzes mit 26 bezeichnete Stoßfängereinheit verdeckt ist.

Die Seitenträger 18 und 20 sind dabei an Montageflächen 28 der Fahrzeugkarosserie 22, vorzugsweise Montageflächen 28 von Trägerelementen 30 der Fahrzeugkarosserie 22 montierbar, wobei die Trägerelemente 30 auf gegenüberliegenden Seiten der Fahrzeugkarosserie 22 so angeordnet sind, dass die Montageflächen 28 der Trägerelemente 30 einander zugewandt sind.

An dem Querträger 14 ist eine Montagebasis 40 angeordnet, an welcher ein als Ganzes mit 42 bezeichneter Kugelhals montierbar ist, der an seinem der Montagebasis 40 abgewandten Ende eine Kupplungskugel 44 trägt.

Prinzipiell könnte der Kugelhals 42 abnehmbar an der Montagebasis 40 gehalten sein.

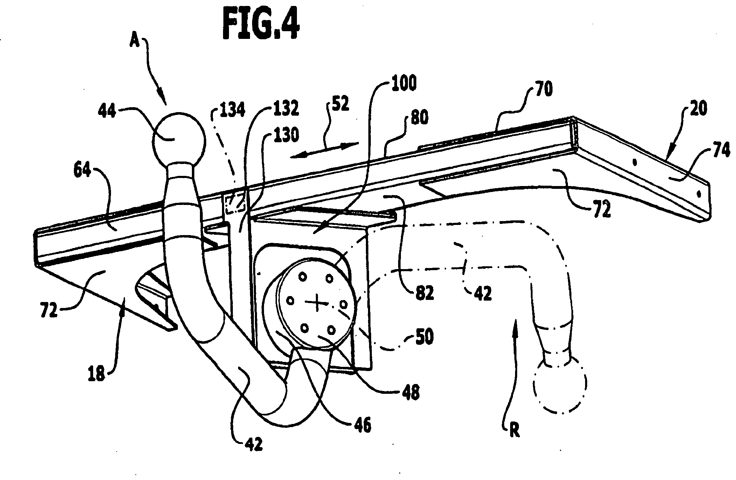

Im dargestellten Ausführungsbeispiel umfasst der Kugelhals 42 an seinem der Montagebasis 40 zugewandten Ende ein Schwenkelement 46, welches an einem Schwenklager 48, das fest auf der Montagebasis 40 angeordnet ist, um eine Schwenkachse 50 drehbar gelagert ist, so dass der Kugelhals 42 von seiner in den Fig. 1 bis 4 durchgezogen gezeichneten Arbeitsstellung A in eine in Fig. 4 gestrichelt dargestellte Ruhestellung R verschwenkbar ist, in welcher sich der Kugelhals 42 zumindest abschnittsweise parallel zu einer Längsrichtung 52 des Querträgers 14 erstreckt.

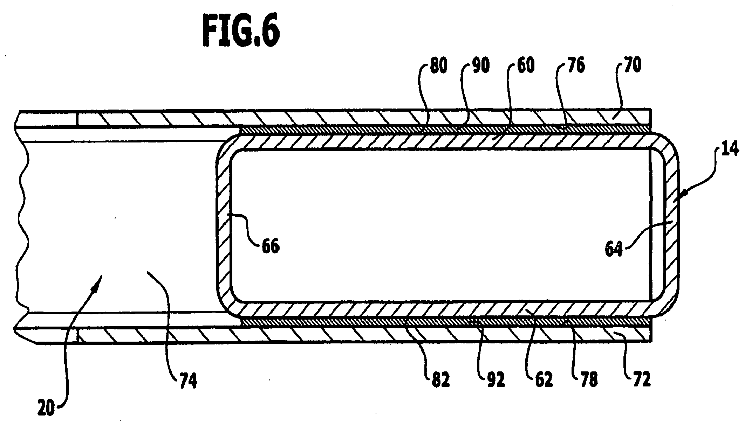

Bei dem dargestellten Ausführungsbeispiel ist, wie in Fig. 6 dargestellt, der Querträger 14 aus einem Vierkantrohraus Flachmaterial, insbesondere aus Stahl, hergestellt, welches ein durch eine obere Wand gebildetes Oberteil 60 und ein durch eine untere Wand gebildetes Unterteil 62 aufweist, die durch als Verstrebungselemente 64, 66 ausgebildete Seitenwände des Vierkantrohrs miteinander verbunden sind.

Alternativ zu der dargestellten Lösung ist es aber auch denkbar, den Querträger 14 beispielsweise im Querschnitt Doppel-T-förmig auszubilden oder dem Querträger 14 eine andere Form zu geben, bei welchem das Oberteil 60 und das Unterteil 62 durch beliebig geformte Verstrebungselemente, beispielsweise auch Verstrebungsrippen, miteinander verbunden sind.

Das dargestellte Vierkantrohr mit dem Oberteil 60, dem Unterteil 62 und den Verstrebungselementen 64 und 66 stellt lediglich eine einfache Ausführungsform des Querträgers 14 dar.

Ferner ist der Querträger 14 aus einem hochfesten Stahl hergestellt, der eine Zugfestigkeit von mindestens 600 Newton/mm² aufweist und somit in der Lage ist, bei geringer Masse große Kräfte aufzunehmen.

Um bei einem derartigen Querträger 14 aus hochfestem Stahl eine günstige Verbindung zu den Seitenteilen 18 und 20 zu schaffen, sind bei einem ersten Ausführungsbeispiel, wie in Fig. 1 bis 4 sowie 6 dargestellt, die Seitenträger 18 und 20 als Biegeteile aus Flachmaterial hergestellt, die einen U-förmigen Querschnitt aufweisen und somit ein oberes Flanschteil 70, ein unteres Flanschteil 72 sowie ein Querflanschteil 74 aufweisen, die einstückig zusammenhängend ausgebildet sind.

Dabei ist das Querflanschteil 74 so ausgebildet, dass es an der jeweiligen Montagefläche 28 des jeweiligen Trägerelements 30 angelegt und an diesem beispielsweise durch Schrauben fixiert werden kann.

Das obere Flanschteil 70 sowie das untere Flanschteil 72 sind, wie in Fig. 1 bis 4 dargestellt so ausgebildet, dass diese das Oberteil 60 und das Unterteil 62 jeweils auf ihrer Oberseite 80 bzw. Unterseite 82 übergreifen und an diesen innerhalb von Überlappungsbereichen 84, 86 anlegen sowie innerhalb der Überlappungsbereiche 84, 86 fixiert sind.

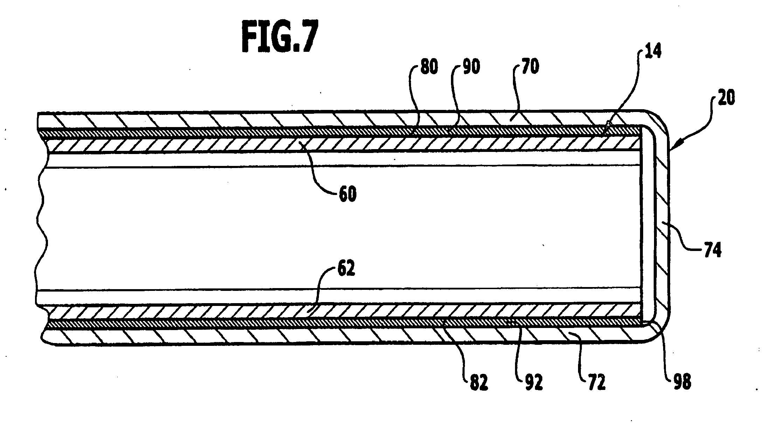

Bei dem ersten Ausführungsbeispiel ist dabei innerhalb der Überlappungsbereiche 84 und 86, wie in Fig. 6 und 7 dargestellt, eine im Wesentlichen flächenhafte Verbindung durch eine in Form einer Folie aufgebrachte stoffschlüssige Verbindungsschicht 90 bzw. 92 vorgesehen, die einerseits vollflächig an der Oberseite 80 und der Unterseite 82 des Oberteils 60 bzw. des Unterteils 62 des Querträgers 14 anliegt und andererseits im Wesentlichen vollflächig an diesen zugewandten Oberflächen 76 bzw. 78 des oberen Flanschteils 70 bzw. des unteren Flanschteils 72.

Wie fernerin Fig. 6 und Fig. 7 dargestellt, erfolgt die Verbindung zwischen dem Querträger 14 und den Seitenträgern 18 und 20 lediglich über die Verbindungsschichten 90 und 92 innerhalb der Überlappungsbereiche 84 und 86, so dass insbesondere zwischen einem Endbereich 98 des Querträgers 14 und dem Querflanschteil 74 keine Verbindung besteht, sondern die Übertragung der von dem Kugelhals 42 auf den Querträger 14 wirkenden Kräfte auf die Seitenträger 18 und 20 lediglich über die Verbindungsschichten 90, 92 erfolgt.

Die Verbindungsschichten 90, 92 können alle Arten von Materialien umfassen, deren Auftrag oder Eintrag keine thermische Veränderung des Gefüges des hochfesten Stahls des Querträgers 14 und vorzugsweise auch des hochfesten Stahls der Seitenträger 18 und 20 bewirkt. Das heißt, dass die Materialien so ausgebildet sein müssen, dass deren Anwendung keine Aufheizung auf eine Temperatur erfordert, die Gefügeveränderungen in dem hochfesten Stahl des Querträgers 14 und beispielsweise auch der Seitenträger 18 und 20 bewirkt.

Im einfachsten Fall sind die Verbindungsschichten 90, 92 Schichten eines Klebers.

Alternativ dazu können die Verbindungsschichten 90 und 92 auch Schichten eines Lotmaterials, insbesondere eines Hartlotmaterials sein, dessen Auftrag keine Gefügeveränderungen im hochfesten Stahl des Querträgers 14 und insbesondere auch der Seitenträger 18 und 20 bewirkt.

Zur Fixierung der Montagebasis 40 an dem Querträger 14 sind, wie in den Fig. 1 bis 4 dargestellt, Halteelemente 100, 102 vorgesehen, die einerseits an der Unterseite 82 des Querträgers 14 anliegende Flansche 104, 106 umfassen und andererseits die Montagebasis 40 zwischen sich einschließende Flansche 110 und 112.

Die Flansche 104 und 106 sind vorzugsweise in ihren Überlappungsbereichen 114 und 116 mit der Unterseite 82 des Querträgers 14 flächenhaft und stoffschlüssig verbunden und ebenfalls in Überlappungsbereichen 120 und 122 stoffschlüssig mit der Montagebasis 40 verbunden, die im einfachsten Fall als Platte ausgebildet ist und mit ihren einander gegenüberliegenden Oberflächen 124, 126 von den Flanschen 110 und 112 der Halteelemente 100, 102 zumindest bereichsweise übergriffen ist.

Zusätzlich ist beispielsweise noch das Halteelement 102 mit einem Stützflansch 130 versehen, welcheralseinstückig an den Flansch 112 angeformtes Biegeteil ausgebildet ist und mit einem Bereich 132 das Verstrebungselement 64 des Querträgers 14 übergreift und dabei in einem Überlappungsbereich 134 flächig mit dem Verstrebungselement 64 verbunden ist.

Darüber hinaus stehen die beiden Flansche 104 und 106 über das Unterteil 62 des Querträgers 14 in Richtung der Heckschürze 24 der Fahrzeugkarosserie 22 über, und sind mit ihren überstehenden Bereichen mit einem Fixierelement 140 flächig und stoffschlüssig verbunden, das seinerseits wiederum flächig und stoffschlüssig an dem Verstrebungselement 66 des Querträgers 14 anliegt und an diesem fixiert ist.

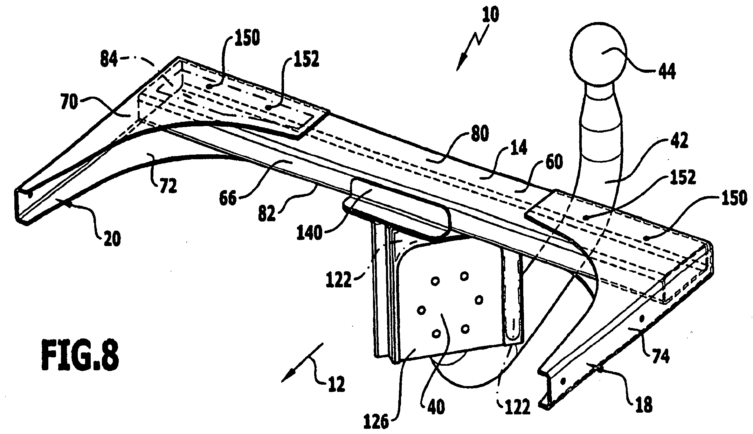

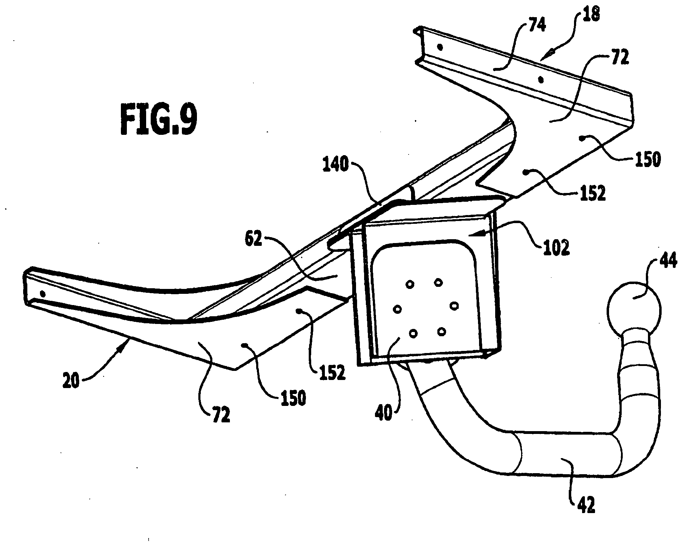

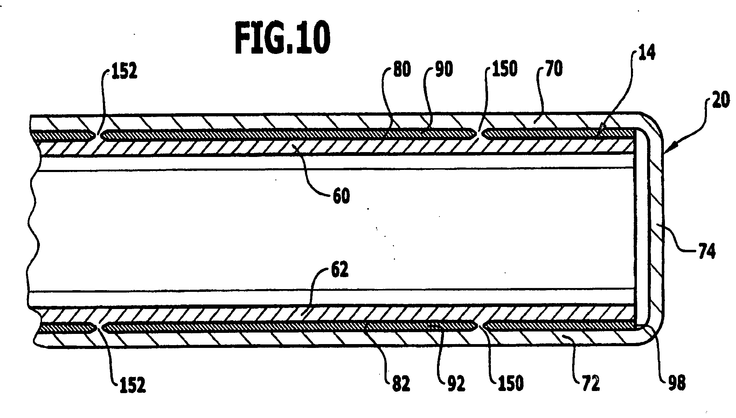

Bei einem zweiten Ausführungsbeispiel, dargestellt in den Fig. 8 bis 10, sind diejenigen Teile, die mit denen des ersten Ausführungsbeispiels identisch sind, mit denselben Bezugszeichen versehen, so dass vollinhaltlich auf die Ausführungen zu diesen Bezug genommen werden kann.

Im Gegensatz zum ersten Ausführungsbeispiel sind bei dem zweiten Ausführungsbeispiel die jeweiligen oberen Flanschteile 70 sowie die unteren Flanschteile 72 über Punktschweißverbindungen 150 und 152 mit dem jeweiligen Oberteil 60 bzw. dem Unterteil 62 verbunden, und zwar zusätzlich zu der vorgesehenen Verbindungsschicht 90, 92, wobei die Punktschweißverbindungen 150 und 152 die Verbindungsschicht 90, 92 jeweils durchsetzen und somit eine zusätzliche lokale stoffschlüssige Verbindung zwischen dem jeweiligen oberen Flanschteil 70 und dem Oberteil 60 sowie dem jeweiligen unteren Flanschteil 72 und dem Unterteil 62 bilden.

Der Vorteil dieser Lösung ist darin zu sehen, dass durch die Punktschweißverbindungen 150 und 152 die Möglichkeit besteht, beispielsweise bei Verwendung eines Klebstoffs als Verbindungsschicht 90, 92 das obere Flanschteil 70 und das untere Flanschteil 72 an dem Oberteil 60 bzw. dem Unterteil 62 unabhängig vom Aushärten der Verbindungsschicht 90, 92, fest an den Querträger 14, insbesondere dem Oberteil 60 und dem Unterteil 62 desselben zu fixieren, so dass der Querträger 14 mit den Seitenträgern 18 und 20 im Fertigungsprozess weiter gehandhabt werden können, ohne dass sich diese relativ zueinander bewegen und ihre Position verändern. Somit kann beispielsweise das Aushärten der Verbindungsschicht 90, 92 im Zuge eines späteren Aufheizens des Querträgers 14 und der Seitenträger 18, 20 bei einem Lacktrocknungsprozess mit erfolgen.

Darüber hinaus sind die Auswirkungen der Punktschweißverbindungen 150 und 152 auf die Stabilität des Querträgers 14 und auch der Seitenträger 18, 20 im Hinblick auf den verwendeten hochfesten Stahl irrelevant, da lediglich eine punktuelle Veränderung der Zugfestigkeit vorliegt, die sich jedoch auf das Teil als Ganzes nicht auswirkt.

Derartige lokale stoffschlüssige Verbindungen sind auch bei der Verbindung der Halteelemente 100, 102 mit dem Querträger 14 und/oder der Montagebasis 40 einsetzbar.

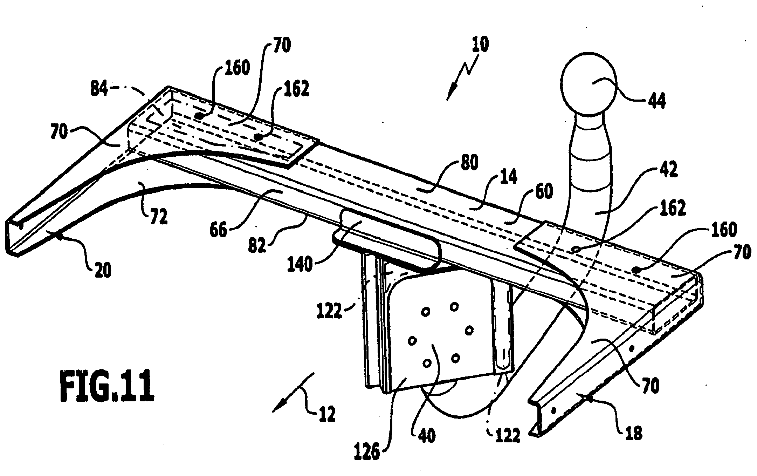

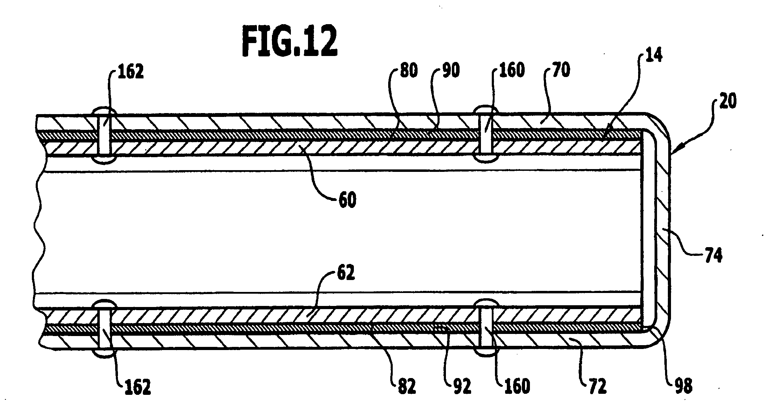

Bei einem dritten Ausführungsbeispiel, dargestellt in Fig. 11 und 12 sind diejenigen Teile, die mit denen des voranstehenden Ausführungsbeispiels identisch sind, mit denselben Bezugszeichen versehen, so dass auf die Ausführungen zum ersten Ausführungsbeispiel und zum zweiten Ausführungsbeispiel Bezug genommen werden kann.

Im Gegensatz zum zweiten Ausführungsbeispiel sind die oberen Flanschteile 70 mit dem Oberteil 60 und die unteren Flanschteile 72 mit dem Unterteil 62 über ein lokales Formschlusselement 160, 162 verbunden, wobei die Formschlusselemente 160 und 162 auch die Verbindungsschicht 90, 92 durchsetzen und auf die oberen Flanschteile 70 sowie die unteren Flanschteile 72 mit einer Kraft einwirken, um diese gegen das Oberteil 60 bzw. das Unterteil 62 des Querträgers 14 zu beaufschlagen.

Damit wird durch die Formschlussverbindungselemente 160 und 162 die jeweilige Verbindungsschicht 90 bzw. 92 zwischen dem oberen Flanschteil 70 und dem Oberteil 60 bzw. dem unteren Flanschteil 72 und dem Unterteil 62 eingespannt, um beim Aushärten der Verbindungsschicht 90, 92 eine möglichst flächige Verbindung zwischen den Flanschteilen 70, 72 sowie dem Oberteil 60 und dem Unterteil 62 zu erreichen.

Durch die beiden lokal wirkenden Formschlusselemente 160, 162, die jeweils entsprechende Bohrungen sowohl in den Flanschteilen 70, 72 als auch dem Oberteil 60 und dem Unterteil 62 durchsetzen, erfolgt keine nennenswerte Schwächung des hochfesten Stahls des Querträgers 14 und beispielsweise auch der Flanschteile 70, 72, da die wesentliche Verbindung zwischen dem Querträger 14 mit dem Oberteil 60 und dem Unterteil 62 über die flächenhafte Verbindung, geschaffen durch die jeweilige Verbindungsschicht 90, 92 mit den Flanschteilen 70, 72 erfolgt, so dass die Formschlusselemente 160, 162 lediglich zur Fixierung der Seitenträger 18, 20 relativ zum Querträger 14 so lange dienen, bis die Verbindungsschichten 90, 92 vollständig wirksam sind.

Beim dritten Ausführungsbeispiel sind die lokalen Formschlussverbindungselemente 160, 162 beispielsweise Nieten, es ist aber auch denkbar, eine Schraubverbindung anstelle der Nieten vorzusehen.

Auch bei der Verbindung der Halteelemente 100,102 mit dem Querträger und/oder der Montagebasis sind derartige Formschlussverbindungselemente 160, 162 einsetzbar.

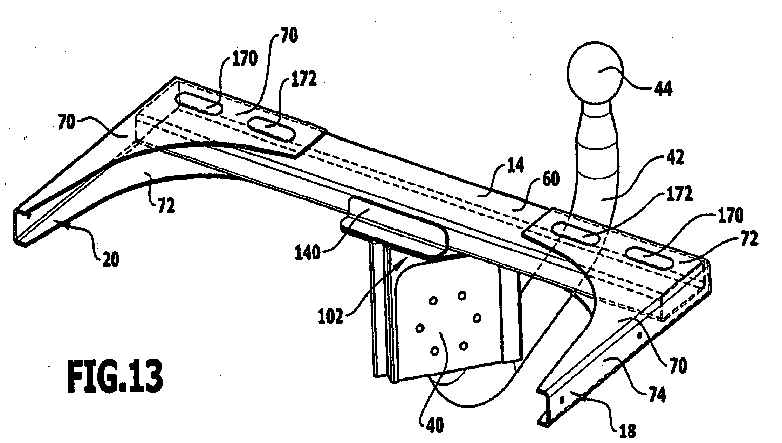

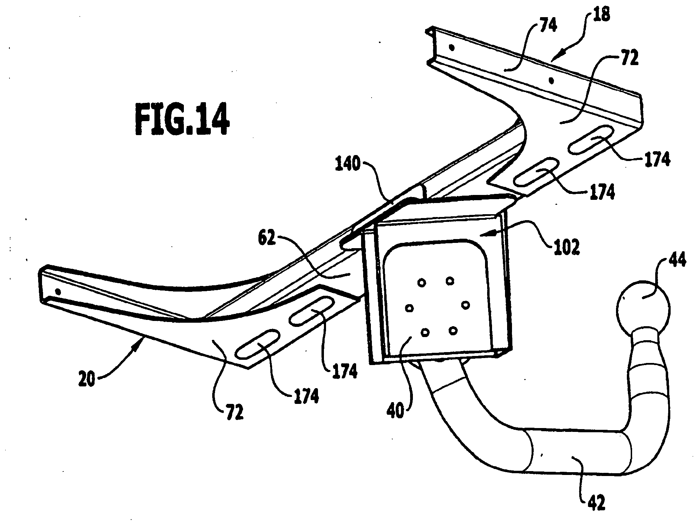

Bei dem erfindungsgemäßen Ausführungsbeispiel, dargestellt in Fig. 13 und Fig. 14 sind die oberen Flanschteile 70 und die unteren Flanschteile 72 mit dem Oberteil 60 und dem Unterteil 62 über Lochschweißverbindungen 170, 172 verbunden, welche weder die Stabilität des Querträgers 14 aus hochfestem Stahl noch die der Seitenträger 18 und 20 signifikant beeindrucken.

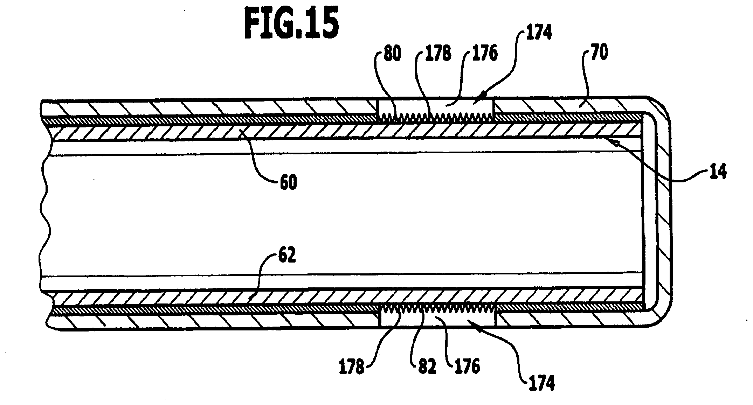

Derartige Lochschweißverbindungen sehen, wie in Fig. 15 dargestellt, vor, dass das jeweilige Flanschteil, beispielsweise das Flanschteil 70 und das Flanschteil 72, jeweils mit Durchbrüchen 174 versehen sind, deren Wandflächen 176 indem jeweiligen Durchbruch 174 umlaufend eine Schweißnaht 178 angebracht wird, die die jeweilige Wandfläche 176 mit der jeweiligen Oberseite 80 bzw. der Unterseite 82 linienförmig verbindet, wobei die Schweißnaht 178 vorzugsweise eine durch Laserschweißen angebrachte Schweißnaht ist, die zu einer möglichst geringen thermischen Belastung des Materials des Oberteils 60 bzw. des Unterteils 62 des Querträgers 14 führt, um möglichst geringfügige Gefügeveränderungen in dem hochfesten Stahl des Querträgers 14 hervorzurufen.

Derartige Lochweißverbindungen 170, 172 können zusätzlich mit den Verbindungsschichten 90 und 92 vorgesehen sein.

Die Lochschweißverbindungen 17o, 172 sind außerdem auch bei der Verbindung zwischen den Halteelementen 100, 102 und dem Querträger 14 und/oder den Halteelementen 100, 102 und der Montagebasis 40 einsetzbar.

## Patentansprüche

1. Anhängekupplung (10) umfassend einen quer zu einer Fahrtrichtung (12) eines Kraftfahrzeugs und insbesondere durch eine hintere Stoßfängereinheit (26) verdeckten Querträger (14), sich ausgehend von dem Querträger (14) in der Fahrtrichtung (12) erstreckende Seitenträger (18, 20) zur Verbindung des Querträgers (14) mit einer Fahrzeugkarosserie (22) und eine an dem Querträger (14) angeordnete Montagebasis (40), an welcher ein eine Kupplungskugel (44) tragender Kugelhals (42) gehalten ist, wobei dass der Querträger (14) mindestens ein Oberteil (60) und ein Unterteil (62) sowie ein das Oberteil (60) und das Unterteil (62) verbindendes Verstrebungselement (64, 66) aufweist,
**dadurch gekennzeichnet, dass** die Seitenträger (18, 20) jeweils mindestens ein Flanschteil (70, 72) aufweisen, welches in einem parallel zu einer Längsrichtung (52) des Querträgers (14) verlaufenden Überlappungsbereich (84, 86) auf dem Oberteil (60) und/oder auf dem Unterteil (62) aufliegt und durch mindestens eine Lochschweißverbindung (170, 172) mit diesem verbunden ist.

2. Anhängekupplung (10) nach Anspruch 1, **dadurch gekennzeichnet, dass** die Seitenträger (18, 20) jeweils mindestens ein Flanschteil (70, 72) aufweisen, welches in einem parallel zu einer Längsrichtung (52) des Querträgers (14) verlaufenden Überlappungsbereich (84, 86) auf dem Oberteil (60) und/oder auf dem Unterteil (62) aufliegt und durch eine flächige stoffschlüssige Verbindungsschicht (90, 92) mit diesem verbunden ist.

3. Anhängekupplung nach Anspruch 1 oder 2, **dadurch gekennzeichnet, dass** der Querträger (14) als einstückiges Profil ausgebildet ist, dessen Profilelemente das Oberteil (60) und das Unterteil (62) bilden.

4. Anhängekupplung nach einem der voranstehenden Ansprüche, **dadurch gekennzeichnet, dass** die Seitenträger (18, 20) stirnseitig des Querträgers (14) verbindungsfrei an diesem gehalten sind.

5. Anhängekupplung nach einem der voranstehenden Ansprüche, **dadurch gekennzeichnet, dass** die Seitenträger (18, 20) jeweils ein mit dem Oberteil (60) verbundenes Flanschteil (70) aus Flachmaterial aufweisen.

6. Anhängekupplung nach einem der voranstehenden Ansprüche, **dadurch gekennzeichnet, dass** die Seitenträger (18, 20) jeweils ein mit dem Unterteil (62) verbundenes Flanschteil (72) aus Flachmaterial aufweisen.

7. Anhängekupplung nach einem der voranstehenden Ansprüche, **dadurch gekennzeichnet, dass** ein oberes Flanschteil (70) und ein unteres Flanschteil (72) durch ein Querflanschteil (74) aus Flachmaterial miteinander verbunden sind.

8. Anhängekupplung nach einem der Ansprüche 2 bis 7, **dadurch gekennzeichnet, dass** die stoffschlüssige Verbindungsschicht (90, 92) eine für das Material des Querträgers (14) gefügeinert herstellbare Verbindung ist.

9. Anhängekupplung nach einem der voranstehenden Ansprüche, **dadurch gekennzeichnet, dass** das die flächige stoffschlüssige Verbindungsschicht (90, 92) bildende bewirkende Material in Form einer Folie aufgetragen ist.

10. Anhängekupplung nach einem der voranstehenden Ansprüche, **dadurch gekennzeichnet, dass** an dem Querträger (14) ein Halteelement (100, 102) für die Montagebasis (40) eines Kugelhalses (42) angeordnet ist.

## Claims

1. Trailer coupling (10) comprising a crossbeam (14) transverse to a direction of travel (12) of a motor vehicle and in particular concealed by a rear bumper unit (26), side beams (18, 20) extending from the crossbeam (14) in the direction of travel (12) to connect the crossbeam (14) to a vehicle body (22), and a mounting base (40), which is arranged on the crossbeam (14) and on which a ball neck (42) carrying a coupling ball (44) is held, wherein the crossbeam (14) has at least an upper part (60) and a lower part (62) as well as a strut element (64, 66) connecting the upper part (60) and the lower part (62),
**characterised in that** the side beams (18, 20) each have at least one flange part (70, 72), which, in an overlap region (84, 86) extending parallel to a longitudinal direction (52) of the crossbeam (14), abuts the upper part (60) and/or the lower part (62) and is connected thereto by at least one hole welding connection (170, 172).

2. Trailer coupling according to claim 1 **characterised in that** the side beams (18, 20) each have at least one flange part (70, 72), which, in an overlap region (84, 86) extending parallel to a longitudinal direction (52) of the crossbeam (14), abuts the upper part (60) and/or the lower part (62) and is connected thereto by a flat substance-to-substance bonding layer (90, 92).

3. Trailer coupling according to claim 1 or 2, **characterised in that** the crossbeam (14) is configured as a one-piece profile, the profile elements of which form the upper part (60) and the lower part (62).

4. Trailer coupling according to any one of the preceding claims, **characterised in that** the side beams (18, 20) are held on the end face of the crossbeam (14) without connection means.

5. Trailer coupling according to any one of the preceding claims, **characterised in that** the side beams (18, 20) each have a flange part (70) made of flat material connected to the upper part (60).

6. Trailer coupling according to any one of the preceding claims, **characterised in that** the side beams (18, 20) each have a flange part (72) made of flat material connected to the lower part (62).

7. Trailer coupling according to any one of the preceding claims, **characterised in that** an upper flange part (70) and a lower flange part (72) are connected to one another by a transverse flange part (74) made of flat material.

8. Trailer coupling according to any one of claims 2 to 7, **characterised in that** the substance-to-substance bonding layer (90, 92) is a connection which can be produced in a structure-inert manner for the material of the crossbeam (14).

9. Trailer coupling according to any one of the preceding claims, **characterised in that** the effective material forming the flat substance-to-substance bonding layer (90, 92) is applied in the form of a film.

10. Trailer coupling according to any one of the preceding claims, **characterised in that** a holding element (100, 102) for the mounting base (40) of a ball neck (42) is arranged on the crossbeam (14).

## Revendications

1. Dispositif d'attelage (10) comprenant une traverse (14) transversale au sens de marche (12) d'un véhicule et notamment cachée par un pare-chocs (26) arrière, des longerons latéraux (18, 20) partant de la traverse (14) dans le sens de la marche (12) pour relier la traverse (14) à la carrosserie (22) du véhicule et une base de montage (40) disposée sur la traverse (14), base de montage sur laquelle est maintenue un cou (42) portant une boule d'attelage (44), la traverse (14) présentant au moins une partie supérieure (60) et une partie inférieure (62) ainsi qu'un élément d'entretoisement (64, 66) reliant la partie supérieure (60) et la partie inférieure (62), **caractérisé en ce que** les longerons latéraux (18, 20) présentent chacun au moins un flasque (70, 72) reposant, dans une zone de chevauchement (84, 86) s'étendant parallèlement à un sens longitudinal (52) de la traverse (14), sur la partie supérieure (60) et/ou sur la partie inférieure (62) et relié à celle-ci par au moins une soudure en bouchon (170, 172).

2. Dispositif d'attelage (10) selon la revendication 1, **caractérisé en ce que** les longerons latéraux (18, 20) présentent chacun au moins un flasque (70, 72) qui repose sur la partie supérieure (60) et/ou sur la partie inférieure (62) dans une zone de chevauchement (84, 86) s'étendant parallèlement à un sens longitudinal (52) de la traverse (14) et relié à cette partie supérieure et/ou inférieure par une couche de liaison plate (90, 92) par liaison de matière.

3. Dispositif d'attelage selon la revendication 1 ou la revendication 2, **caractérisé en ce que** la traverse (14) a la forme d'un profilé d'un seul tenant dont les éléments forment la partie supérieure (60) et la partie inférieure (62).

4. Dispositif d'attelage selon l'une quelconque des revendications précédentes, **caractérisé en ce que** les longerons latéraux (18, 20) sont maintenus sur la partie frontale de la traverse (14) sans être reliés à celle-ci.

5. Dispositif d'attelage selon l'une quelconque des revendications précédentes, **caractérisé en ce que** les longerons latéraux (18, 20) présentent chacun un flasque (70) en plats relié à la partie supérieure (60).

6. Dispositif d'attelage selon l'une quelconque des revendications précédentes, **caractérisé en ce que** les longerons latéraux (18, 20) présentent chacun un flasque (72) en plats relié à la partie inférieure (62).

7. Dispositif d'attelage selon l'une quelconque des revendications précédentes, **caractérisé en ce qu'**un flasque supérieur (70) et un flasque inférieur (72) sont reliés entre eux par un flasque transversal (74) en plats.

8. Dispositif d'attelage selon l'une quelconque des revendications 2 à 7, **caractérisé en ce que** la couche de liaison (90, 92) par liaison de matière est une liaison pouvant être établie structurellement sans effet pour la matière de la traverse (14).

9. Dispositif d'attelage selon l'une quelconque des revendications précédentes, **caractérisé en ce que** la matière active formant la couche de liaison plate (90, 92) par liaison de matière est appliquée sous forme de film.

10. Dispositif d'attelage selon l'une quelconque des revendications précédentes, **caractérisé en ce qu'**un élément de retenue (100, 102) pour la base de montage (40) d'un cou de boule d'attelage (42) est disposé sur la traverse (14).
